# EUROPEAN PATENT SPECIFICATION

(11) **EP 3 019 741 B1**
(45) Date of publication and mention of the grant of the patent: **21.02.2018**
(21) Application number: 14741191.2
(22) Date of filing: 07.07.2014
(51) Int. Cl.: F03D 1/06

(54) **WIND TURBINE BLADE WITH SECTIONS THAT ARE JOINED TOGETHER**
WINDTURBINENBLATT MIT ABSCHNITTEN, DIE ZUSAMMENGESETZT SIND
PALE D'ÉOLIENNE AVEC SECTIONS QUI SONT JOINTES L'UN À L'AUTRE

(30) Priority: 09.07.2013 DK 201370385
(43) Date of publication of application: 18.05.2016
(73) Proprietor: Vestas Wind Systems A/S, 8200 Aarhus N (DK)
(72) Inventor: BECH, Anton, DK-6950 Ringkøbing (DK); HIBBARD, Paul, Singapore 169586 (SG)
(74) Representative: Vestas Patents Department
(86) International application number: PCT/DK2014/050204
(87) International publication number: WO 2015/003713

(56) References cited:
- WO-A1-03/078833
- WO-A1-2004/078461
- WO-A1-2006/002621
- WO-A1-2010/135737
- NL-C2- 1 001 200

## Description

### Field of the invention

The present invention relates to a sectional blade for a wind turbine, the blade comprising at least a first and a second blade section extending in opposite directions from a blade joint and being structurally connected by a spar bridge.

### Background

Modern wind turbines comprise a plurality of wind turbine rotor blades, typically three blades, each blade having a weight of up to 35 tons and a length of up to 55 meters or longer.

Traditionally, a blade comprises two shell parts, one defining a windward side shell part and the other one defining a leeward side shell part. Each of the shell parts are traditionally made in one piece.

In one blade type which is sometimes referred to as structural shell blade, the blade is reinforced by each shell part comprising one or more spar caps acting as reinforcing beams running lengthways in each shell, i.e. in the longitudinal direction of the blade. Further a number of webs are located in the cavity between the two wind turbine shell parts connecting the two shell parts and extend substantially throughout the length of the shell cavity.

In this structural shell type blade, the spar caps may e.g. be built up by layers of fiber-reinforced material preferable with the fibers predominantly running in the lengthwise direction in order to increase the longitudinal stiffness and strength. The layers of the spar cap may be made of e.g. pre-pregs or pultrusions. The pultrusions may be cured and then stacked on top of each other in the shell mould optionally together with layers of other types of material, and are then bonded by resin infusion.

During operation of the wind turbine, each wind turbine blade is exposed to considerable loads and moments both in the longitudinal direction of the blade mainly resulting from centrifugal forces, in the flapwise direction dominated by flapwise bending moments from aerodynamic thrust loads, and in the edgewise direction mainly from edgewise gravity dominated loads acting on the blade.

As the size of wind turbines and thus wind turbine blades are still growing, the production facilities and the transport means must be increased to handle blades of the required size. This also increases the demand on logistics and increases the associated costs.

Wind turbine blades manufactured in parts or sections for later joining are known, however with major problems on obtaining the necessary strength of the joints between the connected blade parts and for safe transfer of the loads and moments across the joint. Further, difficulties may arise in designing and making the blade joints without jeopardizing the stiffness and weight considerations on the blades.

One known type of joint is the finger type joint where each blade section comprises a number of corresponding dentations which are fitted into each other across the blade joint. The dentations may be made in the entire end of each blade section or only in some parts hereof. In order to increase the structural strength of the joint, the dentations may preferably be made in the spar caps of each blade section which are then joined. However, the making of the dentations in the spar caps has proven difficult without an increased risk of splitting between the fibres. WO2006/002621 describes a wind turbine blade comprising at least two sections which are connected at a connection joint. The connection joint comprises a number of corresponding dentations which are fitted into each other across the blade joint.

### Description of the invention

It is therefore an object of embodiments of the present invention to overcome or at least reduce some or all of the above described disadvantages of the known sectional wind turbine blades and to provide an improved method of manufacturing such a blade.

A further object of embodiments of the invention is to provide a wind turbine blade which may be manufactured effectively in sections yet assembled with sufficient joint strength and stiffness.

A further object of embodiments of the inventions is to provide an efficient method of manufacture of such sectional blade prepared for joining by means of a joint of the dentation or finger type joint.

In accordance with the invention this is obtained by a wind turbine blade comprising at least two wind turbine blade sections connected in a blade connection joint and where each blade section at their connection end comprises a number of corresponding or partly corresponding dentations arranged to interconnect across the blade connection joint upon connection of the blade sections. At least one of the blade sections comprises a spar cap structure of a number of fiber-reinforced layers, and a connecting part, the connecting part having a first end joined to the spar cap structure and an opposite second end positioned at the blade section connection end and comprising a number of said dentations. The connecting part further comprises a number of sheets which are interleaved with the fibre-reinforced layers of the spar cap structure in an overlapping zone thereby joining the spar cap structure and the connecting part, the sheets comprising said number of said dentations (103).

Each blade section may comprise two or more shell parts, defining a windward and a leeward side shell part. Typically the windward and leeward side shell parts each comprise a spar cap structure running in the longitudinal direction of the blade and acting as reinforcing beams and forming part of the longitudinal strength and bending stiffness of the wind turbine blade. These shell parts may be assembled before joining the blade sections.

When assembled, the blade sections are structurally connected at least partly by the dentations interconnected across the blade joint. Hereby may be obtained a joint of high strong and strength properties as the forces are transferred across longer, larger, and non-perpendicular surfaces across the joint.

Further dentations, fingers, or teeth may form part of the shell parts. The dentations may be formed in the exterior surface of the blade, in the spar cap structure, and/or in one or more of the interior parts of the wind turbine blade. Alternatively or additionally the dentations may be formed in the entire or major part of each blade section connection end. In one embodiment the dentations are formed only in the connecting part of the at least one blade section.

One or both blade sections may comprise one or more connecting parts as described in the above. The connecting part of one blade section may be connected to a connecting part of the other blade section. Additionally or alternatively, a connecting part of one blade section may be connected to a spar cap structure or another part of the other blade section.

By a sectional blade as described above is obtained that the blade sections are held together and connected effectively. By means of the dentations interconnecting across the blade connection joint is obtained that the bending and tensile loads and moments are transferred across the blade joint from the one blade section to the other.

Further, because the connecting part comprises a number of sheets interleaved or overlapping with the layers of the spar cap structure, the connecting part is likewise effectively and strongly joined to the spar cap structure.

Thereby, by a part of or all the dentations being formed in the connecting part which in turn is joined to the spar cap structure, the loads and moment may be effectively transferred from the spar cap structure of the one blade section via one or more connecting parts to the spar cap structure of the other blade section. Hereby is thus obtained an effective and strong connection of the wind turbine blade sections.

By the use of the connecting part, the desired dentations for the blade connection joint need not be made in the spar cap structure of the blade section. This may be especially advantageous as a spar cap structure most often comprises very long layers up to the length of each blade section which are therefore more difficult to handle during manufacture than a connecting part.

Further, by the use of a connecting part, the shaping of dentations in the spar cap structure can be avoided which could otherwise be difficult or even impossible without cutting off or splitting fibers in the fiber-reinforced layers of the spar cap structure. Rather, the sheets and thereby the connecting part may be relatively easily joined effectively joined to the spar cap structure by means of the interleaving in the overlapping zone. This joint type may be realized without any special shaping or cutting of the ends of the layers of the spar cap structure and may be established during the moulding of the blade section. Hereby the dentations of the connecting part may be positioned at the connection end of the blade section more precisely simply by the positioning of the sheets of the connecting part and without the need for adjusting the positions of the layers of the spar cap structure which could otherwise be a complicated and difficult task.

The sheets of the connecting parts may interleave with the layers of the spar cap structure by the layers and sheets being placed alternatingly in the overlapping zone. In an embodiment the layers and the sheets are interleaved by a number of sheets (such as 2, 3, or 4) being placed between each two layers of the spar cap structure. In an embodiment the layers and the sheets are interleaved by a number of layers (such as 2, 3, or 4) being placed between each two sheets of the connecting parts, or by combinations hereof.

The layers of the spar cap structure are of a fiber-reinforced material such as of resin impregnated carbon fibers, aramid fibers, glass fibers or combinations hereof.

The sheets of the connecting part may be composites comprising fibers of e.g. carbon, aramid, or glass or combinations hereof, and may of a woven or non-woven material. Preferably the sheets are of fiber-reinforced material with the fibers running primarily in the direction from its first to its second end. The sheets may be dry, partly, or fully impregnated. In the latter case, the sheets may be semi or fully cured prior to being joined to the layers of the spar cap structure. In general, the possibility to manufacture the turbine blade in sections may reduce the manufacturing costs in that the blade mould sizes may be correspondingly reduced and thereby the demands to the space required during manufacture as well as to the equipment for moving around and handling the blade sections and moulds.

As blade sections may be smaller than normal blade shells, the blade sections may be easier to transport from a manufacturing site to an assembly site for being assembled compared to blades in one piece. Furthermore, the assembly site can be situated close to the place where the turbine blade it to be used. By manufacturing the blade of different parts, these parts may be transported unassembled, thereby facilitating transport with the possibility of reducing the associated costs.

The dentations, teeth, or fingers may e.g. be of a triangular shape or shaped as four-sided teeth such as rectangles, or of more rounded shapes or more free-hand shapes or combinations hereof. Hereby it is possible to establish corresponding or partly corresponding dentations with large contact surfaces which may also be easy to manufacture and connect.

In an embodiment, some or all the dentations of connecting section ends may partly correspond to each other across the joint and any cavities may be filled with e.g. filling parts such as triangular or diamond shaped blocks.

The blade may comprise more than one joint and thus comprise more than two blade sections and more than one blade connection joint.

The joint may be approximately at the middle part of the blade providing blade sections of approximately the same length. However, the blade portions may also be of different length. As an example, the first blade section may define a main blade portion, whereas the second blade section may define a tip portion. In one embodiment of the invention the second blade section may define a blade tip of the outermost 1-8 m such as 5 m of the blade.

In an embodiment of the invention the second blade section may form a winglet. Winglets can attain different shapes such as e.g. a sharply bent tip in an angle from a few degrees to 90° relative to the lengthwise direction of the blade, or such as a gradually bent tip. Hereby is obtained that the blade may be transported in parts which may e.g. be relatively flat compared to a traditional blade with winglet, thereby facilitating transport with the possibility of reducing the associated costs.

According to an embodiment of the invention, a cross-sectional dimension of the connecting part is larger at the second end than at the first end. Hereby the cross-sectional dimension of the connecting part is increased towards the end comprising the dentations. The larger cross-sectional dimension may be obtained by a larger width or thickness of the connecting part at its second end, or combinations hereof.

The larger cross-sectional dimension advantageously increases the area of bonding across the blade connection joint which increases the strength of the joint significantly. By increasing the cross-sectional dimension of the connecting part it is obtained that the increase in dimension towards the joint allows the joint strength to be increased without any or only with smaller changes in the cross-sectional dimension of the spar cap structure. In this way layers having a uniform cross-sectional dimension may be used for the spar cap structure while still obtaining a thicker and/or wider element at the blade connection end by means of the connecting part.

In an embodiment at least one of a thickness or a width of the connecting part increases in a direction from its first end towards its second end, hereby realizing a larger cross-sectional dimension at the connection end than at the overlapping zone.

According to one embodiment of the invention, the sheets of the connecting part are pre-manufactured. Preparing the sheets in advance may be especially advantageous for an easier and faster and more accurate shaping of the dentations. By the premanufacture of the sheets, the dentations may be shaped or prepared by a wider variety of different techniques such as e.g. by cutting or forming the dentations during moulding of the sheets. The premanufacture of the sheets further allows for the simple and advantageous joining of the connecting part to the spar cap structure by laying up the layers of spar cap structure and the sheets in an overlapping manor.

In an embodiment of the invention, the fiber-reinforced layers of the spar cap structure are pultruded. Hereby may be obtained a spar cap structure of increased strength and stiffness in the longitudinal direction of the spar where the loads are dominant, with better fibre alignment compared to e.g. extruded layers, and with increased fibre-to- resin ratios. Further, the proposed blade joint using a connecting part is especially advantageous in the context of spar cap structures built up of pultruded layers, as the connecting part makes it possible to have a blade connection joint of the finger or dentation type, which would otherwise be difficult if not impossible to make in the pultruded layers of the spar cap without cutting some fibers or splitting.

Even further, the connecting part makes it possible to increase the cross-sectional dimension of the resulting overall spar cap structure (i.e. the spar cap structure joined to the connecting part) towards the blade connecting joint thereby increasing the strength of the joint. Again this is especially advantageous with the spar cap structure built up by pultruded layers which as standard are of constant cross-sectional area along their length.

According to an embodiment of the invention, the fibre-reinforced layers of the spar cap structure end in the overlapping zone at substantially the same lengthwise position. In this way the layers of the spar cap structure may be prepared with the same length.

In an embodiment of the invention the sheets of the connecting part and/or the fibre-reinforced layers of the spar cap structure are chamfered in the overlapping zone. Hereby may be obtained an increased strength of the joint between the connecting part and the spar cap structure. Also, the chamfering may aid to reduce stress concentrations at the ends of the sheets and/or the layers. Further, the chamfering may yield a gradual transition from the one member to the other. The chamfering may be obtained by traditional methods such as by cutting or shearing off the ends of the layers and/or sheets at an angle or by dropping plies or fiber tows.

The invention further concerns a method of preparing a wind turbine blade section with a connection end prepared for connection to another wind turbine blade section in a blade connection joint and comprising at its connection end a number of dentations arranged to interconnect across the blade connection joint to corresponding or partly corresponding dentations of another blade section. The method comprises preparing a connecting part with a first end and an opposite second end, the second end forming a number of said dentations, and the connecting part comprises a number of sheets the sheets comprising said number of said dentations. The method further comprises placing layers of fibre-reinforced material in a mould to form a spar cap structure of the blade section, placing the connecting part in the mould such as to form a part of the
connection end of the blade section, and joining the first end of the connecting part to the spar cap structure by interleaving the sheets of the connecting part with the fibre-reinforced layers of the spar cap structure in an overlapping zone upon placing in the mould.

This method of preparing a wind turbine section is advantageous in making it possible to prepare the blade section to be joined to another blade section by means of dentations across the blade joint without having to make the dentations in spar cap structure itself. This is especially advantageous when the spar cap structure comprises a number of very long layers as the handling or special preparation of the layers is thereby kept as low as possible. Further, the making of dentations in such layers of a spar cap structure may be difficult if not impossible without degrading the physical and mechanical properties of the material, e.g. by splitting. By the proposed method is obtained that the dentations are made in the connecting part which may be far easier prepared and handled both during the forming of the dentations and during the placing in the mould. Also, the use of the connecting part makes it possible to optionally change the cross-sectional dimensions of the load-carrying structure towards the blade joint, such as for example increasing the thickness and/or width of the connecting part. This may be especially advantageous in connection with the use of pultruded layers in the spar cap structure where the increase in cross-sectional dimension may otherwise be difficult or even impossible. Further, by the interleaving of the sheets of the connecting part and the layers of the spar cap structure may be ensured a strong joint between the spar cap structure and the connecting part so that the loads may be safely transferred from the spar cap structure into the connecting part and across the blade joint of the dentations to the another blade section upon connection.

The proposed method further allows for a more precise placing and positioning of the dentations at the blade connection end thereby enabling an easier and more accurate connection to the other blade section reducing the need for any finishing.

Further advantages are as previously mentioned in relation to the wind turbine blade according to the present invention.

In an embodiment, the method further comprises chamfering the ends of the fibre-reinforced layers and/or the ends of the sheets in the overlapping zone. As mentioned previously this may make the transition from the spar cap structure to the connecting part more gradual and may increase the strength of the connection considerably. The chamfering may be achieved e.g. by means of cutting or shearing.

In a further embodiment of the method, the connecting part and the spar cap structure are joined by means of an adhesive which may yield a very strong bond. The adhesive may be added as the sheets and layers are placed in the mould and may additionally or alternatively be added by infusion or injection prior to or in relation to resin injection in the mould.

In a further embodiment of the method, the preparing of the sheets of the connecting part comprises lay-up of pre-impregnated fibre-reinforcement material in an open mould, closing the mould, and full or partial curing of the sheets. Hereby the sheets may be prepared in the desired dimensions (such as width and uniform or varying thicknesses) as desirable to be connected to the spar cap layers later.

In an embodiment, the method of preparing a wind turbine blade section according to the above further comprises cutting and rolling a number of unidirectional prepreg sheets to form fingers, and the lay-up comprises placing a number of fingers next to each other in the mould. Hereby the fingers or dentations of each sheet may be obtained by simple means without needing to cut off fibers or splitting of plies. Further, by the rolling of the unidirectional prepregs may be obtained that the fibres are kept aligned in the longitudinal direction of each finger.

In a further embodiment of the method, the layers of the spar cap structure are pultruded. The advantages hereof are as described previously in relation to the blade sections.

The invention further concerns a method of preparing a sheet for a connecting part, the connecting part having a first end and an opposite second end comprising a number of dentations, the method comprising cutting and rolling a number of unidirectional prepreg sheets to form fingers. The fingers are then placed next to each other and partially apart in an open mould such as to form the dentations. The mould is then closed, and the sheet is fully or partially cured. As mentioned above, this is advantageous in obtaining a sheet for a connecting part in the desired shape of dentations in one end during the moulding and without the need for any later machining or cutting. Further may be obtained a number of dentations with the fibres aligned along the length of each finger.

In an embodiment of the method according to the above, the prepreg sheets are cut at an angle to the fibers and rolled around an axis substantially parallel to the fibers. Hereby each finger becomes gradually thinner towards one of or both its ends while maintaining the fibres to be aligned with the finger direction. The length from one end to the thickest portion of the finger may be controlled by the size of the angle at which the prepreg sheet is cut and may naturally be the same or may vary from one finger to the next.

### Brief description of the drawings

In the following different embodiments of the invention will be described with reference to the drawings, wherein:
Fig. 1 shows a sketch of a wind turbine blade of two blade sections connected in a joint,
Fig. 2 illustrates a blade connection end with dentations,
Fig. 3 shows the wind turbine blade in a cross sectional view,
Fig 4 shows the blade joint in a sectional view A-A marked in figure 3 and along the length of the blade,
Figs. 5A-C illustrate the steps in manufacturing a sectional blade according to embodiments of the invention by the connection of a spar cap structure and a connecting part,
Figs. 6 and 7 illustrate the spar cap structure joined to a connecting part in a perspective and cross sectional view, respectively, and
Figs. 8A-D illustrate the manufacturing process of a connecting part according to an embodiment of the invention.

### Detailed description of the drawings

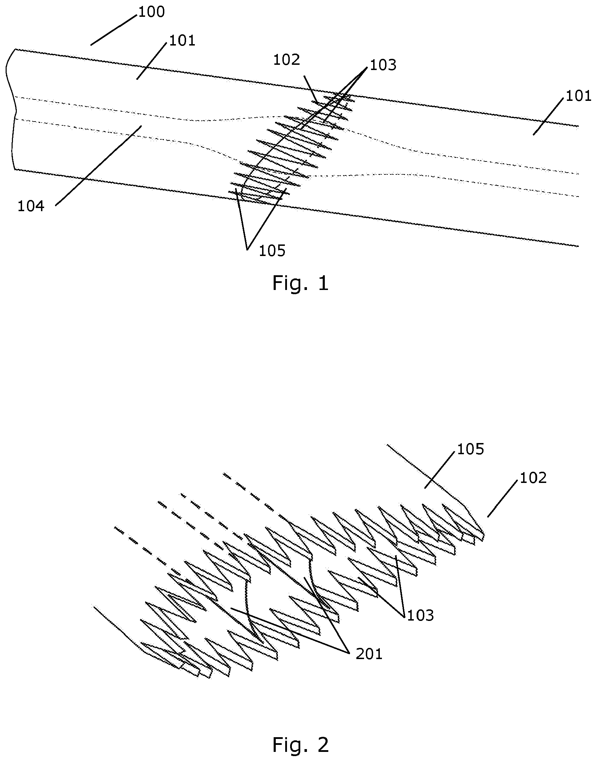

Figure 1 illustrates a part of a wind turbine blade 100 comprising two blade sections 101 joined in a blade connection joint 102. Each blade section 101 comprises at its connection end 105 a number of dentations or fingers 103 which are interconnected across the joint 102. A spar cap structure 104 of each blade section is indicated by the hatched lines. The spar cap structure may advantageously increase in size towards the blade joint 102 to increase the strength of the joint and of the blade itself across the joint. In the shown embodiment, the dentations are formed in the entire blade shell. In other embodiments the dentations are formed in only parts of the each blade section connection end such as in the spar cap structure.

Figure 2 shows a disassembled joint 102 with dentations 103 formed in the blade section connection end 105. Here, the dentations are shaped in the shell structure including in the spar cap structure 104 of both the leeward and windward shell parts. The figure further shows the shear webs 201 interconnecting the leeward and windward shell.

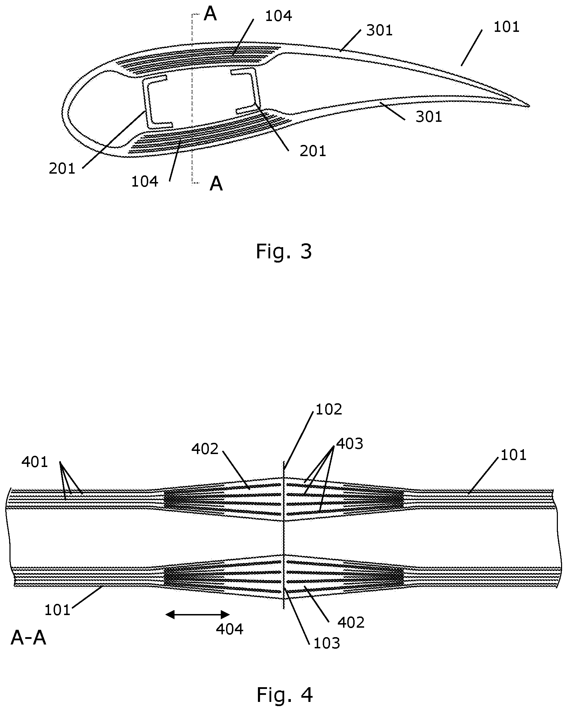

Figure 3 shows a cross-sectional view of a blade at a blade joint according to one embodiment of the invention. The blade is reinforced by each shell part 301 comprising a spar cap structure 104 acting as a reinforcing beam running in the longitudinal direction of the blade. The two shell parts are connected by in this embodiment two webs 201 likewise extending in the longitudinal direction of the blade. This is likewise shown in figure 4 showing two blade sections 101 connected in the blade joint 102 in a sectional view A-A as indicated in figure 3. Here each blade section comprises a spar cap structure made of layers 401 of fiber-reinforced material. The spar cap structure is joined to a connecting part 402 which has dentations (not seen in the cross-sectional view in figure 4) formed at its one end extending across the blade joint. In this embodiment the dentations of the connecting part of one blade section are interconnected to dentations in a connecting part of the other blade section. The connecting part 402 comprises a number of sheets 403 which are interleaved with layers of the spar cap structure in an overlapping zone 404 to effectively join the connecting part and the spar cap structure. In an embodiment of the invention and as is illustrated in figure 4 the connecting part increases in size towards the blade joint which increases the strength of the joint considerably. Both the thickness and/or the width of the connecting part may be larger at the blade joint end than at the end joined to the spar cap structure.

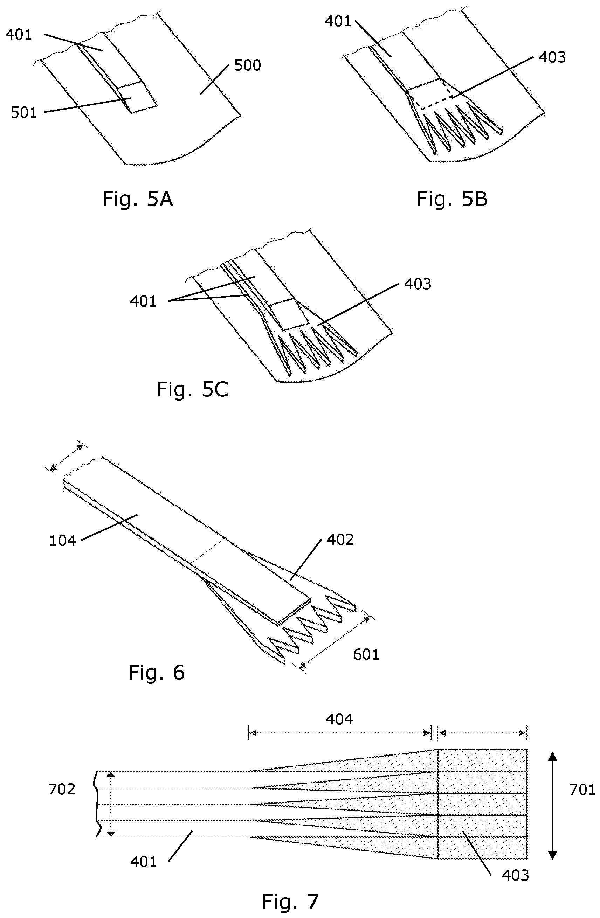

Figures 5A-C illustrate steps in one way of manufacturing a blade section 101. Most often layers of e.g. glass material are first placed in the mould 500 to form the outermost layers of the shell. Then a layer of the spar cap structure 401 is placed in the mould 500 (figure 5A). The layer may advantageously be chamfered 501 at its end to be joined to the connecting part 402. Then (figure 5B) a sheet 403 of the connecting part comprising a number of premade dentations 103 is placed partly overlapping with the layer of the spar cap structure. The overlapping end of the connecting part may also be chamfered. A further layer of the spar cap structure is then placed partly overlapping with the connecting part sheet (figure 5C) and so forth. The layers and the sheets may be joined by adhesive or by injected or infused resin during the moulding of the shells. Naturally a sheet of the connecting part could equally well be placed first in the mould to be followed by a layer of the spar cap structure, as illustrated in figure 7. If the sheets of the connecting part are applied as the outermost layers in the overlapping region, a larger increase in thickness towards the joint can be obtained. Such an embodiment is illustrated in figure 7 where the thickness is increased from the thickness of the spar cap structure 702 to the thickness of the connecting part 701. The resulting overall spar cap structure of the spar cap 104 joined to the connecting part 402 is shown in figure 6 and 7 in a perspective and cross-sectional view, respectively. Hereby the desired dentations for the blade joint can be obtained without being made in the most often very long layers of the spar cap structure. Further, the desired feature of the cross-sectional dimension of the spar cap increasing towards the connection end is obtained by simple means - a feature which would otherwise be difficult to obtain especially when using pultruded layers in the spar cap structure.

The figures 6 and 7 show how the use of the connecting part joined to the spar cap structure may yield an increase in a cross-sectional dimension of the overall spar cap structure towards the blade connection end. Here both the width 601 (i.e. the chordwise length) and the thickness 701 are increased. Figure 7 also show the overlapping zone 404 between the layers 401 of the spar cap structure and the sheets 403 of the connecting part, and the chamfering of the layers and the sheets within the overlapping zone. The larger the thickness of the connecting part at its joint end 701, the shorter the length of the overlapping region 404 can be. The shorter dentations make manufacture easier as the shorter dentations are more stiff and stable and easier to handle and place correctly in the mould.

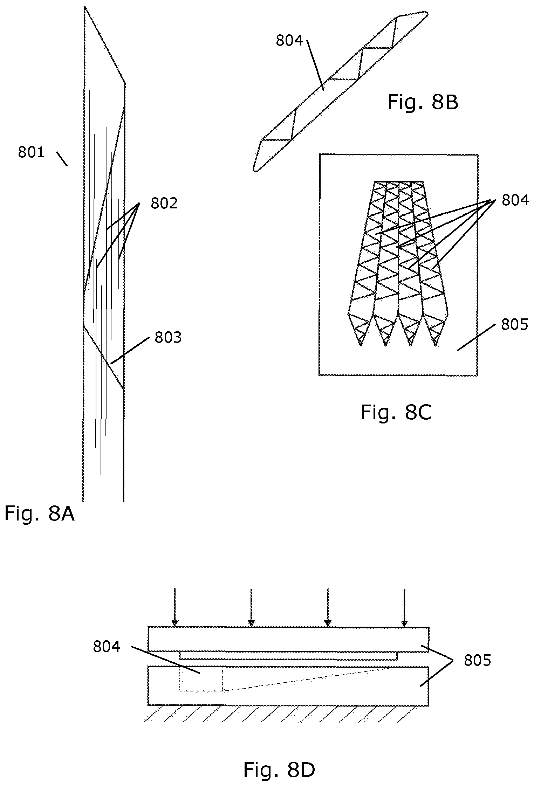

The sheets of the connecting part may be manufactured as illustrated in the figures 8A-D. In figure 8A is sketched a sheet of unidirectionally fiber-reinforced material 801 with the fibers extending in the longitudinal direction of the sheet as indicated by the thin lines 802. The layered material may be dry or partly impregnated. The sheet is cut in acute angles 803 and then each piece is rolled around an axis parallel to the fiber direction of the sheet, figure 8B. Hereby is obtained a finger-shaped, croissant-like element 804 which is thicker at the middle and decreases in thickness towards both ends. A number of such fingers 804 are then placed next to each other in a mould 805 as illustrated in figure 8C such that the fingers spread at one end to form dentations. The mould is then closed, pressure applied, and resin injected if needed, and the resin is cured, figure 8D.

Alternatively, the sheets of the connecting part or some of them could be formed from sheets cut or otherwise machined into the desired shape, such as from pultrusions.

While preferred embodiments of the invention have been described, it should be understood that the invention is not so limited and modifications may be made without departing from the invention. The scope of the invention is defined by the appended claims, and all devices that come within the meaning of the claims, either literally or by equivalence, are intended to be embraced therein.

## Claims

1. A wind turbine blade (100) comprising at least two wind turbine blade sections (101) connected in a blade connection joint (102), each blade section at their connection end (105) comprising a number of corresponding or partly corresponding dentations (103) arranged to interconnect across the blade connection joint upon connection of the blade sections, wherein at least one of the blade sections (101) comprises:
a spar cap structure (104) of a number of fiber-reinforced layers (401),
and a connecting part (402), the connecting part having a first end joined to the spar cap structure and an opposite second end positioned at the blade section connection end (105) and comprising a number of said dentations (103),
the connecting part (402) further comprising a number of sheets (403) which are interleaved with the fibre-reinforced layers (401) of the spar cap structure in an overlapping zone (404) thereby joining the spar cap structure and the connecting part, the sheets comprising said number of said dentations (103).

2. A wind turbine blade according to any of the preceding claims, wherein a cross-sectional dimension of the connecting part (402) is larger at the second end than at the first end.

3. A wind turbine blade according to any of the preceding claims, wherein at least one of a thickness or a width of the connecting part (402) increases in a direction from its first end towards its second end.

4. A wind turbine blade according to any of the preceding claims, where the sheets of the connecting part (402) are pre-manufactured.

5. A wind turbine blade according to any of the preceding claims, where the fiber-reinforced layers (401) of the spar cap structure are pultruded.

6. A wind turbine blade according to any of the preceding claims, wherein the fibre-reinforced layers (401) of the spar cap structure end in the overlapping zone (404) at substantially the same lengthwise position.

7. A wind turbine blade according to any of the preceding claims, wherein the sheets (403) of the connecting part (402) are chamfered in the overlapping zone (404).

8. A wind turbine blade according to any of the preceding claims, wherein the fibre-reinforced layers (401) of the spar cap structure are chamfered in the overlapping zone (404).

9. A method of preparing a wind turbine blade section (101) with a connection end (105) prepared for connection to another wind turbine blade section in a blade connection joint (102) and comprising at its connection end a number of dentations (103) arranged to interconnect across the blade connection joint to corresponding or partly corresponding dentations of another blade section, the method comprising
- preparing a connecting part (402) with a first end and an opposite second end, the second end forming a number of said dentations, the connecting part comprises a number of sheets (403), the sheets comprising said number of said dentations (103),
- placing layers (401) of fibre-reinforced material in a mould (500) to form a spar cap structure (104) of the blade section (101),
- placing the connecting part (402) in the mould (500) such as to form a part of the connection end (105) of the blade section (101), and
- joining the first end of the connecting part (402) to the spar cap structure (104) by interleaving the sheets (403) of the connecting part with the fibre-reinforced layers (401) of the spar cap structure in an overlapping zone (404) upon placing in the mould (500).

10. A method of preparing a wind turbine blade section according to claim 9, further comprising chamfering the ends of the fibre-reinforced layers (401) and/or the ends of the sheets (403) in the overlapping zone (404).

11. A method of preparing a wind turbine blade section according to any of claims 9-10, wherein the connecting part (402) and the spar cap structure (104) are joined by means of an adhesive.

12. A method of preparing a wind turbine blade section according to any of claims 9-11, wherein the preparing of the sheets (403) of the connecting part comprises lay-up of pre-impregnated fibre-reinforcement material in an open mould (805), closing the mould, and full or partial curing of the sheets.

13. A method of preparing a wind turbine blade section according to claims 12, further comprising cutting and rolling a number of unidirectional prepreg sheets (801) to form fingers (804)and wherein the lay-up comprises placing a number of fingers next to each other in the mould (805).

14. A method of preparing a wind turbine blade section according to any of claims 9-13, wherein the layers (401) of the spar cap structure (104) are pultruded.

15. A method of preparing a sheet (403) for a connecting part (402) having a first end and an opposite second end comprising a number of dentations (103), the method comprising cutting and rolling a number of unidirectional prepreg sheets (801) to form fingers (804), placing in an open mould (805) the fingers next to each other and partially apart such as to form the dentations, closing the mould, and fully or partially curing the sheet.

16. A method of preparing a sheet for a connecting part according to claim 15, wherein the prepreg sheets (801) are cut at an angle (803) to the fibers and rolled around an axis substantially parallel to the fibers.

## Patentansprüche

1. Windturbinenblatt (100), umfassend zumindest zwei Windturbinenblattabschnitte (101), die in einer Blattanschlussfuge (102) verbunden sind, wobei jeder Blattabschnitt an seinem Verbindungsende (105) eine Anzahl von entsprechenden oder teilweise entsprechenden Verzahnungen (103) umfasst, die angeordnet sind, um bei einer Verbindung der Blattabschnitte über die Blattanschlussfuge miteinander zu verbinden, wobei zumindest einer der Blattabschnitte (101) umfasst:
eine Gurtstruktur (104) aus einer Anzahl von faserverstärkten Schichten (401),
und einem Verbindungsteil (402), wobei das Verbindungsteil ein erstes Ende, das mit der Gurtstruktur verbunden ist, und ein zweites, gegenüberliegendes Ende, das an dem Blattabschnittverbindungsende (105) angeordnet ist und eine Anzahl von Verzahnungen (103) umfasst, aufweist,
wobei das Verbindungsteil (402) weiter eine Anzahl von Folien (403) umfasst, die mit den faserverstärkten Schichten (401) der Gurtstruktur in einer Überlappungszone (404) verschachtelt sind, wodurch die Gurtstruktur und das Verbindungsteil verbunden werden, wobei die Folien die Anzahl von Verzahnungen (103) umfassen.

2. Windturbinenblatt nach einem der vorstehenden Ansprüche, wobei eine Querschnittsabmessung des Verbindungsteils (402) an dem zweiten Ende größer als an dem ersten Ende ist.

3. Windturbinenblatt nach einem der vorstehenden Ansprüche, wobei zumindest eines von einer Dicke oder einer Breite des Verbindungsteils (402) in einer Richtung von seinem ersten Ende zu seinem zweiten Ende zunimmt.

4. Windturbinenblatt nach einem der vorstehenden Ansprüche, wobei die Folien des Verbindungsteils (402) vorgefertigt sind.

5. Windturbinenblatt nach einem der vorstehenden Ansprüche, wobei die faserverstärkten Schichten (401) der Gurtstruktur ziehstranggepresst sind.

6. Windturbinenblatt nach einem der vorstehenden Ansprüche, wobei die faserverstärkten Schichten (401) der Gurtstruktur in der Überlappungszone (404) an im Wesentlichen der gleichen Position in Längsrichtung enden.

7. Windturbinenblatt nach einem der vorstehenden Ansprüche, wobei die Folien (403) des Verbindungsteils (402) in der Überlappungszone (404) abgeschrägt sind.

8. Windturbinenblatt nach einem der vorstehenden Ansprüche, wobei die faserverstärkten Schichten (401) der Gurtstruktur in der Überlappungszone (404) abgeschrägt sind.

9. Verfahren zum Vorbereiten eines Windturbinenblattabschnitts (101) mit einem Verbindungsende (105), das für eine Verbindung mit einem anderen Windturbinenblattabschnitt in einer Blattanschlussfuge (102) vorbereitet ist und das an seinem Verbindungsende eine Anzahl von Verzahnungen (103) umfasst, die angeordnet sind, um über die Blattanschlussfuge mit entsprechenden oder teilweise entsprechenden Verzahnungen eines anderen Blattabschnitts zu verbinden, wobei das Verfahren umfasst
- Vorbereiten eines Verbindungsteils (402) mit einem ersten Ende und einem gegenüberliegenden, zweiten Ende, wobei das zweite Ende eine Anzahl von Verzahnungen bildet, wobei das Verbindungsteil eine Anzahl von Folien (403) umfasst, wobei die Folien die Anzahl von Verzahnungen (103) umfassen,
- Platzieren von Schichten (401) von faserverstärktem Material in einer Form (500), um eine Gurtstruktur (104) des Blattabschnitts (101) zu bilden,
- Platzieren des Verbindungsteils (402) in der Form (500), um einen Teil eines Verbindungsendes (105) des Blattabschnitts (101) zu bilden, und
- Verbinden des ersten Endes des Verbindungsteils (402) mit der Gurtstruktur (104) durch Verschachteln der Folien (403) des Verbindungsteils mit den faserverstärkten Schichten (401) der Gurtstruktur in einer Überlappungszone (404) beim Platzieren in der Form (500).

10. Verfahren zum Vorbereiten eines Windturbinenblattabschnitts nach Anspruch 9, weiter umfassend ein Abschrägen der Enden der faserverstärkten Schichten (401) und/oder der Enden der Folien (403) in der Überlappungszone (404).

11. Verfahren zum Vorbereiten eines Windturbinenblattabschnitts nach einem der Ansprüche 9-10, wobei das Verbindungsteil (402) und die Gurtstruktur (104) mittels eines Klebemittels verbunden werden.

12. Verfahren zum Vorbereiten eines Windturbinenblattabschnitts nach einem der Ansprüche 9-11, wobei das Vorbereiten der Folien (403) des Verbindungsteils umfasst Schichten von vorimprägniertem Faserverstärkungsmaterial in einer offenen Form (805), Schließen der Form, und vollständiges oder teilweises Aushärten der Folien.

13. Verfahren zum Vorbereiten eines Windturbinenblattabschnitts nach Anspruch 12, weiter umfassend Schneiden und Rollen einer Anzahl von unidirektionalen vorimprägnierten Folien (801), um Finger (804) zu bilden, und wobei das Schichten ein Platzieren einer Anzahl von Fingern nebeneinander in der Form (805) umfasst.

14. Verfahren zum Vorbereiten eines Windturbinenblattabschnitts nach einem der Ansprüche 9-13, wobei die Schichten (401) der Gurtstruktur (104) ziehstranggepresst sind.

15. Verfahren zum Vorbereiten einer Folie (403) für ein Verbindungsteil (402), das ein erstes Ende und ein zweites, gegenüberliegendes Ende, das eine Anzahl von Verzahnungen (103) umfasst, aufweist, wobei das Verfahren umfasst Schneiden und Rollen einer Anzahl von unidirektionalen vorimprägnierten Folien (801), um Finger (804) zu bilden, Platzieren, in einer offenen Form (805), der Finger nebeneinander und teilweise voneinander beabstandet, um die Verzahnungen zu bilden, Schließen der Form, und vollständiges oder teilweises Aushärten der Folien.

16. Verfahren zum Vorbereiten einer Folie für einen Verbindungsteil nach Anspruch 15, wobei die vorimprägnierten Folien (801) in einem Winkel (803) zu den Fasern geschnitten werden und um eine Achse, die im Wesentlichen parallel zu den Fasern ist, gerollt werden.

## Revendications

1. Pale d'éolienne (100) comprenant au moins deux sections de pale d'éolienne (101) reliées en un joint de liaison de pales (102), chaque section de pale au niveau de leur extrémité de liaison (105) comprenant un nombre d'indentations correspondantes ou partiellement correspondantes (103) agencées pour s'interconnecter à travers le joint de liaison de pales suite à la liaison des sections de pale, dans laquelle au moins une des sections de pale (101) comprend :
une structure de raidisseur (104) d'un nombre de couches renforcées de fibres (401),
et une partie de liaison (402), la partie de liaison possédant une première extrémité reliée à la structure de raidisseur et une seconde extrémité opposée positionnée au niveau de l'extrémité de liaison de section de pale (105) et comprenant un nombre desdites indentations (103),
la partie de liaison (402) comprenant en outre un nombre de feuilles (403) qui sont entrelacées avec les couches renforcées de fibres (401) de la structure de raidisseur dans une zone de chevauchement (404) reliant ainsi la structure de raidisseur et la partie de liaison, les feuilles comprenant ledit nombre desdites indentations (103).

2. Pale d'éolienne selon l'une quelconque des revendications précédentes, dans laquelle une dimension de section transversale de la partie de liaison (402) est plus grande au niveau de la seconde extrémité qu'au niveau de la première extrémité.

3. Pale d'éolienne selon l'une quelconque des revendications précédentes, dans laquelle au moins l'une parmi une épaisseur ou une largeur de la partie de liaison (402) augmente dans une direction de sa première extrémité vers sa seconde extrémité.

4. Pale d'éolienne selon l'une quelconque des revendications précédentes, où les feuilles de la partie de liaison (402) sont préfabriquées.

5. Pale d'éolienne selon l'une quelconque des revendications précédentes, dans laquelle les couches renforcées de fibres (401) de la structure de raidisseur sont pultrudées.

6. Pale d'éolienne selon l'une quelconque des revendications précédentes, dans laquelle les couches renforcées de fibres (401) de la structure de raidisseur se terminent dans la zone de chevauchement (404) sensiblement au niveau de la même position dans le sens de la longueur.

7. Pale d'éolienne selon l'une quelconque des revendications précédentes, dans laquelle les feuilles (403) de la partie de liaison (402) sont chanfreinées dans la zone de chevauchement (404).

8. Pale d'éolienne selon l'une quelconque des revendications précédentes, dans laquelle les couches renforcées de fibres (401) de la structure de raidisseur sont chanfreinées dans la zone de chevauchement (404).

9. Procédé de préparation d'une section de pale d'éolienne (101) avec une extrémité de liaison (105) préparée pour la liaison à une autre section de pale d'éolienne en un joint de liaison de pales (102) et comprenant au niveau de son extrémité de liaison un nombre d'indentations (103) agencées pour s'interconnecter à travers le joint de liaison de pales avec des indentations correspondantes ou partiellement correspondantes d'une autre section de pale, le procédé comprenant
- la préparation d'une partie de liaison (402) avec une première extrémité et une seconde extrémité opposée, la seconde extrémité formant un nombre desdites indentations, la partie de liaison comprend un nombre de feuilles (403), les feuilles comprenant ledit nombre desdites indentations (103),
- le placement de couches (401) de matériau renforcé de fibres dans un moule (500) pour former une structure de raidisseur (104) de la section de pale (101),
- le placement de la partie de liaison (402) dans le moule (500) de sorte à former une partie de l'extrémité de liaison (105) de la section de pale (101), et
- la liaison de la première extrémité de la partie de liaison (402) à la structure de raidisseur (104) par l'entrelacement des feuilles (403) de la partie de liaison avec les couches renforcées de fibres (401) de la structure de raidisseur dans une zone de chevauchement (404) suite au placement dans le moule (500).

10. Procédé de préparation d'une section de pale d'éolienne selon la revendication 9, comprenant en outre le chanfreinage des extrémités des couches renforcées de fibres (401) et/ou des extrémités des feuilles (403) dans la zone de chevauchement (404).

11. Procédé de préparation d'une section de pale d'éolienne selon l'une quelconque des revendications 9-10, dans lequel la partie de liaison (402) et la structure de raidisseur (104) sont reliées au moyen d'un adhésif.

12. Procédé de préparation d'une section de pale d'éolienne selon l'une quelconque des revendications 9-11, dans lequel la préparation des feuilles (403) de la partie de liaison comprend la mise en place d'un matériau de renforcement à fibres préimprégné dans un moule ouvert (805), la fermeture du moule et le durcissement total ou partiel des feuilles.

13. Procédé de préparation d'une section de pale d'éolienne selon la revendication 12, comprenant en outre le découpage et le laminage d'un nombre de feuilles préimprégnées unidirectionnelles (801) pour former des doigts (804) et dans lequel la mise en place comprend le placement d'un nombre de doigts les uns à côté des autres dans le moule (805).

14. Procédé de préparation d'une section de pale d'éolienne selon l'une quelconque des revendications 9-13, dans lequel les couches (401) de la structure de raidisseur (104) sont pultrudées.

15. Procédé de préparation d'une feuille (403) pour une partie de liaison (402) possédant une première extrémité et une seconde extrémité opposée comprenant un nombre d'indentations (103), le procédé comprenant le découpage et le laminage d'un nombre de feuilles préimprégnées unidirectionnelles (801) pour former des doigts (804), le placement dans un moule ouvert (805) des doigts les uns à côté des autres et partiellement éloignés de sorte former les indentations, la fermeture du moule et le durcissement total ou partiel de la feuille.

16. Procédé de préparation d'une feuille pour une partie de liaison selon la revendication 15, dans lequel les feuilles préimprégnées (801) sont découpées à un angle (803) par rapport aux fibres et laminées autour d'un axe sensiblement parallèle aux fibres.
